# EUROPEAN PATENT SPECIFICATION

(11) **EP 2 239 242 B1**
(45) Date of publication and mention of the grant of the patent: **14.05.2014**
(21) Application number: 08874352.1
(22) Date of filing: 24.10.2008
(51) Int. Cl.: C04B 28/02

(54) **A SELF REPAIRING CONCRETE CONTAINING MICROCAPSULES OF UREA FORMALDEHYDE RESIN AND PRODUCING METHOD THEREOF**
SELBSTREPARIERENDER BETON ENTHALTEND MIKROKAPSELN AUS HARNSTOFFORMALDEHYDHARZ UND HERSTELLUNGSVERFAHREN DAFÜR
BÉTON AUTORÉPARABLE CONTENANT DES MICROCAPSULES DE RÉSINE URÉE-FORMALDÉHYDE ET SON PROCÉDÉ DE FABRICATION

(30) Priority: 20.05.2008 CN 200810067312
(43) Date of publication of application: 13.10.2010
(73) Proprietor: Shenzhen University, Guangdong 518060 (CN); Xing, Feng, Guangdong 518060 (CN); Ni, Zhuo, Guangdong 518060 (CN)
(72) Inventor: XING, Feng, Guangdong 518060 (CN); NI, Zuo, Guangdong 518060 (CN)
(74) Representative: Vossius & Partner
(86) International application number: PCT/CN2008/072834
(87) International publication number: WO 2009/140837

(56) References cited:
- WO-A1-2006/018130
- CN-A- 1 736 575
- CN-A- 101 289 298
- DE-A1- 2 557 407
- JP-A- 10 194 801
- JP-A- 2006 321 685
- US-A1- 2006 042 504

## Description

### Field of invention.

This invention relates to self-repairing concrete and similar building materials, particularly relates to self-repairing concrete, similar building materials, and methods of process.

### Background of invention.

As a representative of the traditional building materials, concrete takes advantages of high compressive strength, high durability and low cost, widely used in industrial and civil buildings, bridges, road projects, underground projects, water conservancy and hydropower projects, nuclear power plants, ports and marine engineering etc. Currently, concrete has more than 100 years of history from it been invented, which penetrates to large-span structures, high-rise structures, mega-structure and the special structure.

The foreseeable future, during the country's modernization construction, concrete is still an indispensable building materials. Due to the use of long-term process and under the influence of the surrounding complex environment, in-service concrete structures is producing micro-cracking and local damage inevitably, which would reduce the life of the structures lightly, or would threaten structures safety. For raw materials, mixing ratio, additives, manufacturing processes, casting processes methods, and conservation area will be reviewed and improved, these methods didn't fundamentally change the performance of concrete weaknesses. Therefore, to repair the crack of the concrete in service timely and effectively has become a major concern of scientists and engineers. Due to the damage caused by earthquakes, wind loads, shock and other causes of damage, you can visually detect and fix it manually, using traditional methods (program repair and post-restoration) on the crack repair. In the actual structure of concrete works, there are many small cracks, such as matrix micro-cracking etc, these micro-scale damages due to the limitations of detection technologies may be undetectable.

Therefore, it becomes very difficult to repair these undetectable cracks and damages, if not impossible. If the cracks or damages cannot be timely and effectively restored, the structure will not only affect the normal use of the performance and shorten the life, but also macro-cracks may be triggered and lead to structural brittle fracture, resulting in serious catastrophic accidents. There is an urgent need to adopt a certain technology or method that can take the initiative to automatically repair cracks and damage, and restore or even increase the strength of concrete materials in order to achieve the purpose of extending the service life of concrete structures. Existing technologies can not provide an improved solution to the problem of self-diagnosis and self-repair of concrete micro-cracks The self-repairing of the concrete is conducted by adding special components (such like shape memory alloy) to form an intelligent self-repairing system that can be automatically triggered to fix the damage or crack of the concrete material.

Self-repairing concrete structures are currently concentrated in the hollow fiber restoration techniques, although in the laboratory technology, hollow fiber capsules was proved to be have self-repairing concrete function, but the construction process of concrete vibrator etc would disturb the arrangement of hollow fiber capsule design, and even lead to rupture of the glass wall material, the premature loss of repairing agent, would be unable to attain the purpose of repairing concrete and affect the feasibility of self-healing process of concrete and self-repairing capacity of the repeatability. During conservation and usage process, micro-cracks and cracks in concrete structures appeared in large numbers, randomly. Self-repairing technique requires the repair capsules to be evenly distributed in the concrete structure. Due to the brittle restrictions of hollow fiber material, hollow fiber capsules cannot use current technologies to ensure that the micro-capsule material is evenly distributed in the concrete structure. Thus, the concrete structure micro-cracks self-healing process can only employ special concrete materials and special process, such as self-compacting high performance concrete and non-chopped and crafts. These difficulties limit the effective application of self-repairing works of hollow fiber capsules in repair cracks in the concrete structure. Hollow fiber capsule's surface properties, wall materials strength, geometry parameters and content on the repair of concrete have significant impacts. Fibrous capsule wall material is smooth, so that it isn't easy to form an effective phase interface in concrete, resulting in lower bond strength of concrete. Hollow fiber capsule has large size, sometimes up to millimeters in diameter, which can be considered in the concrete structure, the introduction of fixed agent also inevitably introduces defects, reducing the concrete's own strength and self-healing efficiency. Hollow fiber capsule wall material has large glass strength, micro-cracks of concrete generated by stress may be difficult to provide enough energy to make hollow fiber capsule rupture, thus, the use of this technology may only fix large cracks, while micro-cracks as the most critical factor for the concrete structure damage fracture repair may be limited. This method shows many problems to be solved in engineering applications, including the fibrous capsule durability, repairing timeliness, interface compatibility, reliability and engineering application of the feasibility of restoration and other issues. Early repair of micro-cracks for the durability of concrete structures is essential, so the use of hollow fiber micro-capsule technology does not apply to repair cracks, which has great limitations.

JP H10-194801 describes a specific aggregate which is obtained by impregnating an aggregate main body consisting of a porous material with a repairing liquid for plugging the crack by releasing to the crack generated in the concrete to encapsulate the repairing liquid.

### Summary of the invention.

It is an object of the present invention to provide a self-repairing concrete having urea-formaldehyde resin polymer micro-capsules that can effectively achieve self-repairing of the micro cracks of the concrete. Through appropriate distribution ratio of components, and process conditions etc, a polymer micro-capsules self-repairing concrete structure is formed.

The present invention provides the following items 1 to 3:
1. A self-repairing concrete using urea-formaldehyde resin polymer micro-capsules comprising:
   concrete, micro-capsules and water being mixed together,
   wherein said micro-capsules comprise a capsule wall and an adhesive received in said capsule wall,
   wherein said adhesive is a mono-component adhesive selected from the group consisting of mono-component polyurethane adhesives, organosilico anaerobe, acrylic resin adhesives and chloroprene rubber adhesives, or a multi-component epoxy adhesive,
   wherein said capsule wall of said micro-capsules is made of urea-formaldehyde resin polymer,
   wherein a mass ratio of said concrete : micro-capsules : water = 100 : 1-15 : 15-50,
   wherein a mass ratio of said capsule wall and said adhesive is 100 : 40 - 80,
   wherein said micro-capsules have a spherical granule shape with a diameter of 10-500 µm, and
   wherein a thickness of said capsule wall is 1-10µm.
2. A method for fabricating a self-repairing concrete, comprising the steps of:
   (1) mixing enough water with an appreciable proportion of micro-capsules until said micro-capsules are fully dispersed into said water,
      wherein said micro-capsules have a capsule wall and an adhesive received in said capsule wall,
      wherein said adhesive is a mono-component adhesive selected from the group consisting of mono-component polyurethane adhesives, organosilico anaerobe, acrylic resin adhesives and chloroprene rubber adhesives, or multi-component epoxy adhesives,
      wherein said capsule wall of said micro-capsules is made of urea-formaldehyde resin polymer,
      wherein a mass ratio of said concrete : micro-capsules : water = 100 : 1-15 : 15-50, wherein a mass ratio of said capsule wall and said adhesive is 100:40-80, wherein said micro-capsules have a spherical granule shape with a diameter of 10-500 µm, and
      wherein a thickness of said capsule wall is 1-10µm;
   (2) placing a mixture of said water and said micro-capsules in a stirring container and adding cement into said stirring mixture;
   (3) stirring said mixture with cement slowly and then stirring said mixture with cement rapidly to form a concrete slurry; and
   (4) adding filling agent which comprises dinas into said concrete slurry into a mixing container and vibrating said concrete slurry in said mixing container to remove bubbles in said concrete slurry in said mixing container to form said self-repairing concrete, wherein said concrete slurry is added into said mixing container in parts that 1/3 of said concrete slurry is added into said mixing container at each time until all of said concrete slurry is filled in said mixing container.
3. A method for fabricating the self-repairing concrete comprising the steps of:
   (1) mixing enough water with an appreciable proportion of micro-capsules until said micro-capsules are fully dispersed into said water,
      wherein said micro-capsules comprise a capsule wall and an adhesive received in said capsule wall,
      wherein said adhesive is a mono-component adhesive selected from the group consisting of mono-component polyurethane adhesives, organosilico anaerobe,
      acrylic resin adhesives and chloroprene rubber adhesives, or multi-component epoxy adhesives,
      wherein said capsule wall of said micro-capsules is made of urea-formaldehyde resin polymer,
      wherein a mass ratio of said concrete: micro-capsules: water=100: 1-15: 15-50,
      wherein a mass ratio of said capsule wall and said adhesive is 100:40-80,
      wherein said micro-capsules have a spherical granule shape with a diameter of 10-500 µm, and
      wherein a thickness of said capsule wall is 1-10µm;
   (2) placing a mixture of said water and said micro-capsules in a stirring container and adding cement into said stirring mixture;
   (3) stirring said mixture with cement slowly and then stirring said mixture with cement rapidly to form a concrete slurry;
   (4) vibrating said concrete slurry to remove bubbles in said concrete slurry and forming said concrete slurry into work pieces in molds;
   (5) placing said work piece aside for 1 to 2 hours, scrapping excessive of said concrete slurry in said molds, and then placing said work piece for another 21 to 26 hours; and
   (6) removing said work pieces from said molds and placing said work pieces in a concrete conservation container for 25 to 31 days to form said self-repairing concrete.

Said urea-formaldehyde resin polymer including melamine-formaldehyde and urea-melamine-formaldehyde, are also described in the application of this invention.

The adhesives are monocomponent adhesives, comprising: mono-component polyurethane adhesives, organosilico anaerobe, acrylic resin adhesives and chloroprene rubber adhesives, or multi-component epoxy adhesives; said adhesives preferably having excellent fluidity and cohesion strength.

A preferred embodiment is said multi-component epoxy adhesives, comprising one or more: bisphenol A type epoxy resin, bisphenol F type epoxy resin, bisphenol S type epoxy resin, resorcinol type epoxy resin, organosilicon modified bisphenol A type epoxy resin or organotitanium modified bisphenol A type epoxy resin.

A preferred embodiment is said micro-capsules premixed with 0.1-5% hydrophilc surfactant, said hydrophilc surfactant being uniformly distributed in said concrete; said hydrophilic surfactant comprising one or more of sodium alkylbenzenesulfonate, polyoxyethylene, polyglycide compound or polyol.

A preferred embodiment is said micro-capsules further comprising 8-30% diluents said structure of diluents comprising epoxy group which can improve fluidity of epoxy resin, and together with epoxy resin react with curing agent; said diluents comprising propylene epoxide, propylene epoxide methyl ether, propylene epoxide ether, epichlorohydrin, propylene epoxide, glycidol, epoxidized octene-1, styrene oxide, allyl glycidyl ether, butyl glycidyl ether, phenyl glycidyl ether, cresol glycidyl ether, dibromo-phenyl glycidyl ether, bromo-cresol glycidyl ether, vinyl cyclohexene oxide single-ring, methyl acrylic acid glycidyl ether, 2-ethylhexyl glycidyl ether and tert-butyl phenyl glycidyl ether, etc.

A preferred embodiment is said curing agent, which is a middle-low temperature reaction curing agent comprising one or more linear chain aliphatic polyamine, polyamide, aromatic amine, modified polyamine, polythiol, carbamide derivative, or iminazole derivative; said curing agent and epoxy resin mass ratio is 12 -35%.

Through the control of surface properties of micro-capsules, micro-capsules and concrete are made to form a good interface. Through appropriate distribution ratio of components, and process conditions etc, polymer micro-capsules self-repairing concrete structures and their surface and internal features are formed to ensure the representativeness of the sample in order to better evaluate the integrity of the structure of self-repairing concrete.

The invention provides a method of processing using urea-formaldehyde resin polymer micro-capsules self-repairing concrete. Through the control of surface properties of micro-capsules, micro-capsules and concrete are made to form a good interface. Through appropriate distribution ratio of components, and process conditions etc, polymer micro-capsules self-repairing concrete structures and their surface and internal features are formed to ensure the representativeness.

The invention can use diluents, curing agent and epoxy resin to form a good fluidity, cure high-strength polymer, bond the crack surface effectively, to the purpose of restoring the mechanical properties and the usage.

The invention using the micro-capsules materials, which have good dispersion and stability, through a typical production process of concrete, micro-capsules are evenly dispersed in the matrix of concrete, in the process of mixing and the conservation, micro-capsule material fragmentation does not occur. In the crack process, micro-capsules release adhesives under the stress, and thus repair the concrete.

In one aspect of the invention a class of epoxy adhesives is used in self-repairing concrete materials, which comprise epoxy resin 100, diluent 10-30, and curing agent 15-35.

Adding epoxy diluents can reduce the viscosity of the material and increase liquidity. The modified epoxy resin are packaged with polymer materials. Curing agent can be used directly or be used after micro-encapsulation.

In another aspect, the invention discloses methods for preparing micro-capsules used in self-healing concrete using micro-capsule technique, which is achieved through chemical process and is applicable to self-repairing concrete, to wrap the core materials such as the epoxy resin repair agent into an envelope capsule. The advantages lie in the formation of micro-capsules, the capsule core is isolated from the outside environment, and influences of the outside temperature, oxygen and ultraviolet light and other factors are avoided under appropriate conditions, the capsule core can be released after the envelope is broken. Due to the use for self-healing, the micro-capsules must have the appropriate mechanical strength and heat resistance, the active capsule core material should have a low viscosity, small expansion coefficient, and high performance of adhesive strength after reaction, so that, the microcapsules can be guaranteed to be kept intact in the composite molding process, and release the capsule care under stress of microcracks or heat.

These methods are:
Using urea-formaldehyde resin (UF) package epoxy resin: epoxy resin / urea-formaldehyde prepolymer = 60-80:100, system initial acidity pH is 7.0-8.5, temperature is 25°C. Using Lewis acid to adjust pH to 2-4, reacting 2-4 hours at 60-90°C. Cooling, washing by distilled water, drying, to be a white sample.

In another aspect, the invention achieves a good dispersion of urea-formaldehyde resin polymer micro-capsules material, which can be used to manufacture self-healing of concrete materials, comprising polymer micro-capsules: 100, surfactant:0.5-5.

Mixing surfactant in polymer micro-capsules material using mixing equipment for mixing. During the self-repairing concrete material preparation process, the micro-capsule material reunion does not occur, and the micro-capsule material is distributed evenly in the concrete structure. In addition, this micro-capsule material can improve the fluidity of concrete slurry.

After typical experiments of concrete process and cracks, self-repairing concrete materials can be manufactured. In the self-repairing concrete materials, the crack stress makes the micro-capsules rupture, and the capsule core is released to crack surfaces due to a crack capillary siphon effect and polymerization reactions occur with the curing agent, thereby forming a polymer material of high strength to repair the crack face, so as to achieve the purpose of repair material. Compared with material starting state and the destruction of the state, the mechanical properties have significant recovery, especially the bending strength.

In another aspect, the invention provides methods for preparing self-healing of concrete repairing agent micro-capsules as defined in claims 6 and 7. For the ratio of concrete which includes the organic micro-capsules, using the following process can produce even dispersion and stability of micro-capsules self-repairing concrete materials, and fragmentation does not occur during mixing and conservation.

In step (4), the workpiece is preferably water progressively or step by step.

In step (5) the workpiece is preferably placed for 24 hours.

In step (6) the workpiece is preferably placed in a concrete conservation container for 28 days.

In step (3) of the method of the invention, the mixing is first slow stirring (100-300rpm), and is changed to rapid mixing (700-1000rpm).

Step (4) of the method of the invention involves, vibrating concrete slurry, excluding bubbles; still filling the mould, step by step.

Step (4) of the method of the invention involves pouring, meaning to put into concrete slurry as three times, each time one third, vibrating, excluding bubbles; still filling the mould.

The beneficial effect of this invention is that if concrete materials containing urea-formaldehyde resin micro-capsules experience 8MPa pre-damage and curing treatment, their flexural strength was unchanged or increased compared with the corresponding concrete material. After the same conditions of concrete materials, flexural strength decreased significantly. These data show that during the damage process, epoxy resin was released, from the micro-capsules materials reacted with curing agent in the micro-cracks, repaired damaged structures, and achieved self-repairing concrete materials capabilities. Therefore, the use of micro-capsules can provide self-healing concrete materials, to achieve self-diagnosis and repair micro-cracks in concrete, prevent expansion of micro-cracks, maintain the mechanical structure of the building, have great economic value and environmental value.

### Brief description of the drawings.

**Fig. 1** shows the use of urea-formaldehyde resin polymer micro-capsules self-repairing concrete spread UF / epoxy micro-capsules;
**Fig. 2** shows the fracture morphology of self-repairing concrete composite materials;
**Fig. 3** shows the UF micro-capsules/ concrete interface of self-repairing concrete composite materials;
Fig. 4 shows that the UF micro-capsules were broken during the concrete manufacturing process.

### Detailed description

Embodiment 1: Using diluents to improve the fluidity of epoxy resin and adhesive performance, increase repair efficiency of self-repairing concrete composite materials by adding 20% of 2-heptadecyl-1H-imidazole curing agent in the E-51 epoxy adhesive, and then adding 20% N-butyl glycidyl ether, the viscosity is decreased from 8200mPa • s down to 200 MPa • s, the epoxy adhesive fluidity is increased, which helps the capillary siphon effect, tensile strength varied from 14.0 MPa to 17.6MPa, the modulus was increased from 223.3MPa to 334.0MPa, which proved that N-butyl ether improves the mechanical properties of epoxy resin. FTIR analysis showed that the diluents were involved in the epoxy adhesive and curing agent cross-linking reaction.

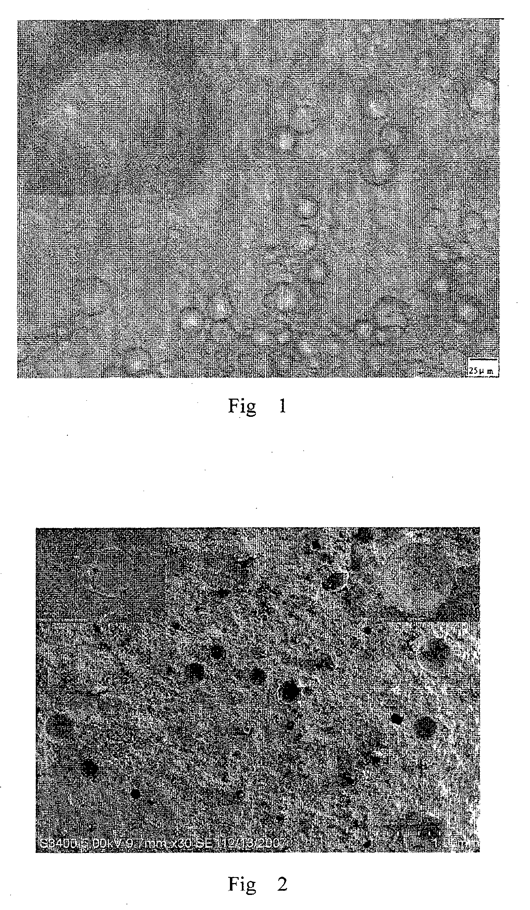

Embodiment 2: With urea-formaldehyde resin as an envelope, capsule core materials such as epoxy resin repair agents are wrapped, to preparate self-repairing concrete composite material micro-capsules. 10.0 grams urea are dissolved in 20.0 grams 37% formaldehyde, using triethanolamine the pH is adjusted to 8.5, and a prepolymer is obtained in mixing state and 70°C constant temperature conditions, after a reaction for 1 hour, 80-160 ml distilled water are added, 14.0 grams epoxy resin of example 1 are added, strong stirring for 20 minutes, got a better stability of the oil / water emulsion. Within 2 hours the pH is adjusted to 4-5 with 2% sulfuric acid with a stirring speed of 300-1200 rpm, reaction temperature conditions of 50-80 °C and 2-3 hours reaction. Product was cooled, washed by distilled water, dried and other steps got a white micro-capsule material. The micro-capsules were spherical with an average particle diameter of 120 microns, wall thickness of 3.5 microns. The electron microscope photographs are shown in Figure 1.

Embodiment 3: Using surfactant to improve the manufacture of concrete self-repairing polymer materials micro-capsules fluidity and dispersion. 1.5 grams sodium dodecyl benzene sulfonate are mixed in 100 grams of polymer micro-capsules of epoxy resin material, and then stirred for 30 minutes to obtain a good fluidity and dispersion powder-like substance.

Embodiment 4: Using urea-formaldehyde resin or melamine-formaldehyde or urea-melamine-formaldehyde polymer micro-capsule material for preparing self-repairing concrete samples. 38.0 grams of water are weighed, 2.0 grams of urea-formaldehyde resin micro-capsules are added to said water, stirring is conducted until micro-capsules are fully dispersed; water is poured into the concrete mixing container, 100.0 grams concrete are mixed; stirring, vibrating, and watering the workpiece etc; stewed one hour, and then stripping, scraped mold overflow of concrete slurry, stewed 24 hours; after disassembly of the mould, transferring workpiece to concrete incubator, incubating 28 days.

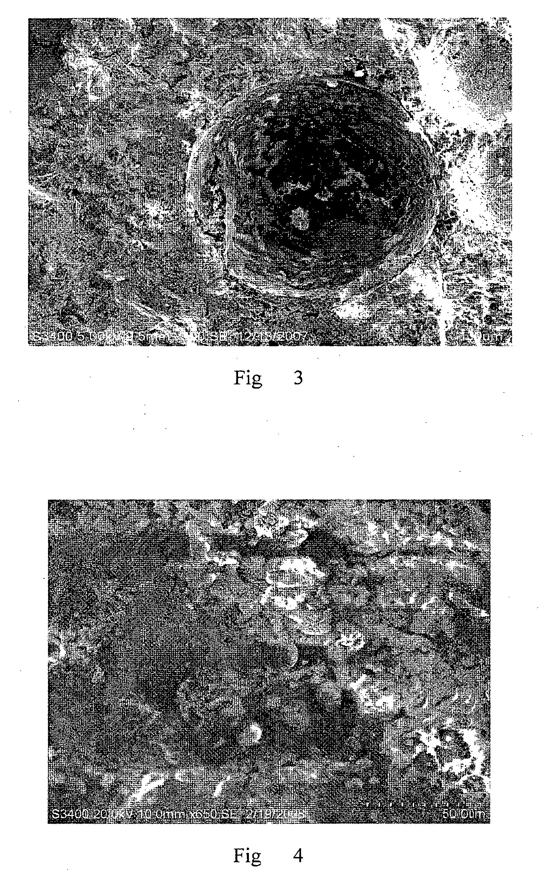

Flexural strength testing and fracture morphology for self-repairing concrete. In the fracture process, most of organic micro-capsule destruction under the stress, a small portion appearance organic micro-capsules / concrete interface separation, shown in Figure 2. Organic micro-capsules and concrete can form a good interface as shown in Figure 3. Testing mechanical properties using three-point bending method, the sample size was 4cm×4cm×16cm, imposed 8MPa generated pre-cracks. Flexural strength of concrete materials was 11.3MPa. After the designed destruction pressure, flexural strength of concrete decreased to 5.5MPa. The organic micro-capsules concrete composite material through the designed destruction pressure and heat repair process, the flexural strength was 11.15MPa, through the same pressure damage and repair processes at room temperature, flexural strength was 10.0MPa. These figures showed that: concrete composite materials using organic micro-capsules, compared with material starting state and the destructed state, had a bending strength which was little changed or increased, the mechanical properties were significantly recovered, proved that the organic micro-capsules had functions for the concrete structure micro-cracks repair. In the self-repairing concrete materials, the crack stress makes the micro-capsules rupture, released capsule core was siphoned through the micro-cracks in a capillary manner, which flows to the crack surface, polymerization reaction occurs with the curing agent, forming a high strength polymers material repairing the crack face, so as to achieve the purpose of repairing material.

Embodiment 5: Using urea-melamine-formaldehyde polymer micro-capsules material for preparing self-repairing concrete. 38.0 grams of water are weighed, 5.0 grams of micro-capsules are added to said water, micro-capsules are stirred until fully dispersed; water is poured into the concrete mixing container, 60.0 grams concrete are mixed, 20.0 grams of sandstone, 10 grams of phosphorous slag powder and 10 grams of fly ash and other materials; stirring, vibrating, and watering the workpiece etc; stewed one hour, and then stripping, scraped mold overflow of concrete slurry, stewed 24 hours; after disassembly of the mould, transferring workpiece to concrete incubator, incubating 28 days.

Embodiment 6: Methods for preparing self-healing of concrete using melamine-formaldehyde polymer micro-capsules, which can produce even dispersion and stability of micro-capsules self-repairing concrete materials.
(1) Weigh enough water, mix appreciable proportion of urea-formaldehyde resins polymers micro-capsules, stir gently, so that the micro-capsules are well dispersed;
(2) Put water into concrete stirred vessel, mix corresponding quality concrete;
(3) Stir concrete slurry slowly (300 rpm), and then stir concrete slurry rapidly (800 rpm);
(4) Vibrate concrete slurry, step by step water workpiece, field poured, meaning to put into concrete slurry as three times, each time one third, vibrating, trouble-shooting of bubbles; still filling with mould.
(5) Stew one hour, and then strip, strike off overflow concrete slurry of mould, stew 24 hours;
(6) After disassembly of the mould, transfer workpiece to concrete incubator, incubate for 28 days.

Take a sample from said concrete, using 5% sulfuric acid corrode for 5 minutes, rinse with distilled water. Dry, observe by electron microscopy, shown as Figure 4. The used micro-capsules were not broken during mixing, curing and maintenance of the concrete material. This phenomenon indicated that the use of polymer micro-capsule technology to prepare self-healing process concrete material has good operability, self-repairing properties repeatability and industrial application.

The above is only exemplary description, technical personnel in this field would be able to devise a variety of implementation modalities depending on the actual requirements. For example, according to the actual need to design a slightly different ratio or specific steps, which belong to the scope of protection of the invention which is defined by the appending claims.

## Claims

1. A self-repairing concrete using urea-formaldehyde resin polymer micro-capsules comprising:
concrete, micro-capsules and water being mixed together,
wherein said micro-capsules comprise a capsule wall and an adhesive received in said capsule wall,
wherein said adhesive is a mono-component adhesive selected from the group consisting of mono-component polyurethane adhesives, organosilico anaerobe, acrylic resin adhesives and chloroprene rubber adhesives, or a multi-component epoxy adhesive,
wherein said capsule wall of said micro-capsules is made of urea-formaldehyde resin polymer,
wherein a mass ratio of said concrete : micro-capsules : water = 100 : 1-15 : 15-50,
wherein a mass ratio of said capsule wall and said adhesive is 100 : 40 - 80,
wherein said micro-capsules have a spherical granule shape with a diameter of 10-500 µm, and
wherein a thickness of said capsule wall is 1-10µm.

2. The self-repairing concrete of claim 1, wherein said multi-component epoxy adhesive comprises one or more of bisphenol A type epoxy resin, bisphenol F type epoxy resin, bisphenol S type epoxy resin, resorcinol-type epoxy resin, organosilicon modified bisphenol A type epoxy resin or organotitanium modified bisphenol A type epoxy resin.

3. The self-repairing concrete of claim 1 or 2, wherein said micro-capsules are premixed with 0.1-5% hydrophilic surfactant and are uniformly distributed in said concrete, wherein said hydrophilic surfactant comprises one or more of sodium alkylbenzenesulfonate, polyoxyethylene, poly-glycide compound or polyol.

4. The self-repairing concrete of claim 3 wherein said micro-capsules further comprise 8-25% diluent, said diluent comprising a curing agent capable of chemically reacting with epoxy resin and improving liquidity of said epoxy resin.

5. The self-repairing concrete of claim 4 wherein said curing agent, which is a middlelow temperature reaction curing agent, comprises one or more of linear chain aliphatic polyamine, polyamide, aromatic amine, modified polyamine, polythiol, carbamide derivative, or iminazole derivative, wherein a mass ratio of said curing agent and epoxy resin is 12-35%.

6. A method for fabricating a self-repairing concrete, comprising the steps of:
(1) mixing enough water with an appreciable proportion of micro-capsules until said micro-capsules are fully dispersed into said water,
wherein said micro-capsules have a capsule wall and an adhesive received in said capsule wall,
wherein said adhesive is a mono-component adhesive selected from the group consisting of mono-component polyurethane adhesives, organosilico anaerobe, acrylic resin adhesives and chloroprene rubber adhesives, or multi-component epoxy adhesives,
wherein said capsule wall of said micro-capsules is made of urea-formaldehyde resin polymer,
wherein a mass ratio of said concrete : micro-capsules : water = 100 : 1-15 : 15-50,
wherein a mass ratio of said capsule wall and said adhesive is 100:40-80, wherein said micro-capsules have a spherical granule shape with a diameter of 10-500 µm, and
wherein a thickness of said capsule wall is 1-10µm;
(2) placing a mixture of said water and said micro-capsules in a stirring container and adding cement into said stirring mixture;
(3) stirring said mixture with cement slowly and then stirring said mixture with cement rapidly to form a concrete slurry; and
(4) adding filling agent which comprises dinas into said concrete slurry into a mixing container and vibrating said concrete slurry in said mixing container to remove bubbles in said concrete slurry in said mixing container to form said self-repairing concrete, wherein said concrete slurry is added into said mixing container in parts that 1/3 of said concrete slurry is added into said mixing container at each time until all of said concrete slurry is filled in said mixing container.

7. A method for fabricating the self-repairing concrete comprising the steps of:
(1) mixing enough water with an appreciable proportion of micro-capsules until said micro-capsules are fully dispersed into said water,
wherein said micro-capsules comprise a capsule wall and an adhesive received in said capsule wall,
wherein said adhesive is a mono-component adhesive selected from the group consisting of mono-component polyurethane adhesives, organosilico anaerobe, acrylic resin adhesives and chloroprene rubber adhesives, or multi-component epoxy adhesives,
wherein said capsule wall of said micro-capsules is made of urea-formaldehyde resin polymer,
wherein a mass ratio of said concrete: micro-capsules: water=100: 1-15: 15-50, wherein a mass ratio of said capsule wall and said adhesive is 100:40-80, wherein said micro-capsules have a spherical granule shape with a diameter of 10-500 µm, and
wherein a thickness of said capsule wall is 1-10µm;
(2) placing a mixture of said water and said micro-capsules in a stirring container and adding cement into said stirring mixture;
(3) stirring said mixture with cement slowly and then stirring said mixture with cement rapidly to form a concrete slurry;
(4) vibrating said concrete slurry to remove bubbles in said concrete slurry and forming said concrete slurry into work pieces in molds;
(5) placing said work piece aside for 1 to 2 hours, scrapping excessive of said concrete slurry in said molds, and then placing said work piece for another 21 to 26 hours; and
(6) removing said work pieces from said molds and placing said work pieces in a concrete conservation container for 25 to 31 days to form said self-repairing concrete.

## Patentansprüche

1. Ein selbstreparierender Beton unter Verwendung von Mikrokapseln aus Hamstoff-Formaldehydharzpolymer, umfassend:
miteinander Vermischen von Beton, Mikrokapseln und Wasser,
wobei die Mikrokapseln eine Kapselwand und einen in der Kapselwand aufgenommenen Klebstoff umfassen,
wobei der Klebstoff ein Einkomponenten-Klebstoff ausgewählt aus der Gruppe bestehend aus Einkomponenten-Polyurethanklebstoffen, anaeroben Organosiliciumverbindungen, Acrylharzklebstoffen und Chloroprenkautschuk-Klebstoffen, oder ein Mehrkomponenten-Epoxidklebstoff ist,
wobei die Kapselwand der Mikrokapseln aus Harnstoff Formaldehydharzpolymer ist,
wobei ein Massenverhältnis Beton : Mikrokapseln : Wasser = 100 : 1-15 : 15-50 beträgt, wobei ein Massenverhältnis der Kapselwand und des Klebstoffs 100:40-80 ist,
wobei die Mikrokapseln eine kugelförmige Granulatform mit einem Durchmesser von 10 bis 500 µm aufweisen, und
wobei eine Dicke der Kapselwand 1 bis 10 µm beträgt.

2. Der selbstreparierende Beton gemäß Anspruch 1, wobei der Mehrkomponenten-Epoxidklebstoff ein oder mehrere aus Epoxidharz vom Bisphenol-A-Typ, Epoxidharz vom Bisphenol-F-Typ, Epoxidharz vom Bisphenol-S-Typ, Epoxidharz vom Resorcinoltyp, mit Organosiloxan modifiziertes Epoxidharz vom Bisphenol-A-Typ oder mit Organotitan modifiziertes Epoxidharz vom Bisphenol-A-Typ umfasst.

3. Der selbstreparierende Beton gemäß Anspruch 1 oder 2, wobei die Mikrokapseln mit 0,1 bis 5 % eines hydrophilen grenzflächenaktiven Mittels vorgemischt sind und gleichmäßig in dem Beton verteilt sind, wobei das hydrophile grenzflächenaktive Mittel eines oder mehrere von Natriumalkylbenzolsulfonat, Polyoxyethylen, Polyglycidverbindung oder Polyol umfasst.

4. Der selbstreparierende Beton gemäß Anspruch 3, wobei die Mikrokapseln weiterhin 8 bis 25 % Verdünnungsmittel umfassen, wobei das Verdünnungsmittel ein Härtungsmittel umfasst, welches mit Epoxidharz chemisch reagieren und die Fließfähigkeit des Epoxidharzes verbessern kann.

5. Der selbstreparierende Beton gemäß Anspruch 4, wobei das Härtungsmittel, welches ein bei mittelniedriger Temperatur reagierendes Härtungsmittel ist, eines oder mehrere von geradkettigem äliphatischem Polyamin, Polyamid, aromatischem Amin, modifiziertem Polyamin, Polythiol, Carbamidderivat oder Iminazolderivat umfasst, wobei ein Massenverhältnis des Härtungsmittels und des Epoxidharzes 12 bis 35 % beträgt.

6. Ein Verfahren zur Herstellung eines selbstreparierenden Betons, umfassend die Schritte:
(1) Mischen von ausreichend Wasser mit einem angemessenen Anteil an Mikrokapseln bis die Mikrokapseln vollständig im Wasser dispergiert sind,
wobei die Mikrokapseln eine Kapselwand und einen in der Kapselwand aufgenommenen Klebstoff aufweisen,
wobei der Klebstoff ein Einkomponenten-Klebstoff ausgewählt aus der Gruppe bestehend aus Einkomponenten-Polyurethanklebstoffen, anaeroben Organosiliciumverbindungen, Acrylharzklebstoffen und Chloroprenkautschuk-Klebstoffen, oder Mehrkomponenten-Epoxidklebstoffen ist,
wobei die Kapselwand der Mikrokapseln aus Harnstoff-Formaldehydharzpolymer ist,
wobei ein Massenverhältnis Beton : Mikrokapseln : Wasser = 100 : 1-15 : 15-50 beträgt,
wobei ein Massenverhältnis der Kapselwand und des Klebstoffs 100:40-80 beträgt, wobei die Mikrokapseln eine kugelförmige Granulatform mit einem Durchmesser von 10 bis 500 µm aufweisen, und
wobei eine Dicke der Kapselwand 1 bis 10 µm beträgt;
(2) Einbringen eines Gemisches aus Wasser und den Mikrokapseln in einen Rührbehälter und Zugeben von Zement zu dem Rührgemisch;
(3) langsames Rühren des Gemischs mit Zement und dann schnelles Rühren des Gemischs mit Zement, um einen Betonslurry zu bilden; und
(4) Zugeben eines Dinas umfassendenden Füllstoffes zu dem Betonslurry in einen Mischbehälter und Vibrieren des Betonslurrys in dem Mischbehälter, um Blasen in dem Betonslurry in dem Mischbehälter zu entfernen, um den selbstreparierenden Beton zu bilden, wobei der Betonslurry in Portionen in den Mischbehälter zugegeben wird, so dass jedes Mal 1/3 des Betonslurrys in den Mischbehälter zugegeben wird, bis der gesamte Betonslurry in den Mischbehälter gefüllt ist.

7. Ein Verfahren zur Herstellung des selbstreparierenden Betons umfassend die Schritte:
(1) Mischen von ausreichend Wasser mit einem angemessenen Anteil an Mikrokapseln bis die Mikrokapseln vollständig im Wasser dispergiert sind,
wobei die Mikrokapseln eine Kapselwand und einen in der Kapselwand aufgenommenen Klebstoff aufweisen,
wobei der Klebstoff ein Einkomponenten-Klebstoff ausgewählt aus der Gruppe bestehend aus Einkomponenten-Polyurethanklebstoffen, anaeroben Organosiliciumverbindungen, Acrylharzklebstoffen und Chloroprenkautschuk-Klebstoffen, oder Mehrkomponenten-Epoxidklebstoffen ist,
wobei die Kapselwand der Mikrokapseln aus Harnstoff-Formaldehydharzpolymer ist,
wobei ein Massenverhältnis Beton : Mikrokapseln : Wasser = 100 : 1-15 : 15-50 beträgt,
wobei ein Massenverhältnis der Kapselwand und des Klebstoffs 100:40-80 beträgt,
wobei die Mikrokapseln eine kugelförmige Granulatform mit einem Durchmesser von 10 bis 500 µm aufweisen, und
wobei eine Dicke der Kapselwand 1 bis 10 µm beträgt;
(2) Einbringen eines Gemisches aus Wasser und den Mikrokapseln in einen Rührbehälter und Zugeben von Zement zu dem Rührgemisch;
(3) langsames Rühren des Gemischs mit Zement und dann schnelles Rühren des Gemischs mit Zement, um einen Betonslurry zu bilden;
(4) Vibrieren des Betonslurrys, um Blasen in dem Betonslurry zu entfernen und Formen des Betonslurrys in Arbeitsstücke in Formen;
(5) Ruhen lassen des Arbeitsstücks für 1 bis 2 Stunden, Abschaben des Überschusses an Betonslurry in den Formen und dann erneutes Ruhen lassen des Arbeitsstückes für weitere 21 bis 26 Stunden; und
(6) Entnahme der Arbeitsstücke aus den Formen und Einbringen der Arbeitsstücke in einen Behälter zur Aufbewahrung des Betons für 25 bis 31 Tage, um den selbstreparierenden Beton zu bilden.

## Revendications

1. Béton autoréparant utilisant des micro-capsules de polymère de résine urée-formaldéhyde comprenant :
du béton, des micro-capsules et de l'eau étant mélangés conjointement,
lesdites micro-capsules comprenant une paroi de capsule et un adhésif reçu dans ladite paroi de capsule,
ledit adhésif étant un adhésif à un composant choisi dans le groupe constitué d'adhésifs de polyuréthane à un composant, un organosilicium anaérobie, des adhésifs de résine acrylique et des adhésifs de caoutchouc chloroprène, ou un adhésif époxy multi-composants,
ladite paroi de capsule desdites micro-capsules étant constituée d'un polymère de résine urée-formaldéhyde,
le rapport en masse desdits béton:micro-capsules:eau = 100:1-15:15-50,
le rapport de masse de ladite paroi de capsule audit adhésif étant de 100:40 à 80,
lesdites micro-capsules ayant une forme de granute sphérique avec un diamètre de 10 à 500 µm, et
l'épaisseur de ladite paroi de capsule étant de 1 à 10 µm.

2. Béton autoréparant de la revendication 1, dans lequel ledit adhésif époxy multi-composants comprend un ou plusieurs parmi une résine époxy de type bisphénol A, une résine époxy de type bisphénol F, une résine époxy de type bisphénol S, une résine époxy de type résorcinol, une résine époxy de type bisphénol A modifiée par organosilicium ou une résine époxy de type bisphénol A modifiée par organotitane.

3. Béton autoréparant de la revendication 1 ou 2, dans lequel lesdites micro-capsules sont prémélangées avec 0,1 à 5 % de tensioactif hydrophile et sont uniformément distribuées dans ledit béton, ledit tensioactif hydrophile comprenant un ou plusieurs de l'alkylbenzènesulfonate de sodium, le polyoxyéthylène, un composé poly-glycide ou un polyol.

4. Béton autoréparant de la revendication 3 dans lequel lesdites micro-capsules comprennent en outre de 8 à 25 % de diluant, ledit diluant comprenant un agent de durcissement capable de réagir chimiquement avec une résine époxy et améliorant ladite fluidité de ladite résine époxy.

5. Béton autoréparant de la revendication 4 dans lequel ledit agent de durcissement, qui est un agent de durcissement de réaction à température basse-moyenne, comprend l'un ou plusieurs parmi une polyamine à chaîne aliphatique linéaire, un polyamide, une amine aromatique, une polyamine modifiée, un polythiol, un dérivé de carbamide, ou un dérivé d'iminazole, le rapport de masse dudit agent de durcissement à la résine époxy étant de 12 à 35 %.

6. Procédé pour fabriquer un béton autoréparant, comprenant les étapes de :
(1) mélange de suffisamment d'eau avec une proportion appréciable de micro-capsules jusqu'à ce que lesdites micro-capsules soient totalement dispersées dans ladite eau,
lesdites micro-capsules ayant une paroi de capsule et un adhésif reçu dans ladite paroi de capsule,
ledit adhésif étant un adhésif à un composant choisi dans le groupe constitué d'adhésifs de polyuréthane à un composant, un organosilicium anaérobie, des adhésifs de résine acrylique et des adhésifs de caoutchouc chloroprène, ou un adhésif époxy multi-composants,
ladite paroi de capsule desdites micro-capsules étant constituée de polymère de résine urée-formaldéhyde,
un rapport de masse desdits béton:micro-capsules:eau = 100:1-15:15-50,
un rapport de masse de ladite paroi de capsule et dudit adhésif étant de 100:40-80, lesdites micro-capsules ayant une forme de granule sphérique avec un diamètre de 10 à 500 µm, et
une épaisseur de ladite paroi de capsule étant de 1 à 10 µm ;
(2) placement d'un mélange de ladite eau et desdites micro-capsules dans un récipient sous agitation et ajout de ciment dans ledit mélange sous agitation ;
(3) agitation dudit mélange avec du ciment lentement et ensuite agitation dudit mélange avec du ciment rapidement pour former une suspension concentrée de béton ; et
(4) ajout d'un agent de charge qui comprend de la Dinas dans ladite suspension concentrée de béton dans le conteneur de mélange et la vibration de ladite suspension concentrée de béton dans ledit conteneur de mélange afin d'éliminer les bulles dans ladite suspension concentrée de béton dans ledit conteneur de mélange pour former ledit béton autoréparant, ladite suspension concentrée de béton étant ajoutée dans ledit conteneur de mélange en parties de sorte que 1/3 de ladite suspension concentrée de béton soit ajouté dans ledit conteneur de mélange à chaque fois jusqu'à ce que toute ladite suspension concentrée de béton soit chargée dans ledit conteneur de mélange.

7. Procédé pour fabriquer le béton autoréparant comprenant les étapes de :
(1) mélange de suffisamment d'eau avec une proportion appréciable de micro-capsules jusqu'à ce que lesdites micro-capsules soient totalement dispersées dans ladite eau,
lesdites micro-capsules comprenant une paroi de capsule et un adhésif reçu dans ladite paroi de capsule,
ledit adhésif étant un adhésif à un composant choisi dans le groupe constitué d'adhésifs de polyuréthane à un composant, un organosilicium anaérobie, des adhésifs de résine acrylique et des adhésifs de caoutchouc chloroprène, ou un adhésif époxy multi-composants,
ladite paroi de capsule desdites micro-capsules étant constituée d'un polymère de résine urée-formaldéhyde,
ledit rapport en masse desdits béton:micro-capsules:eau = 100:1-15:15-50,
où le rapport de masse de ladite paroi de capsule et dudit adhésif étant de 100:40-80,
lesdites micro-capsules ayant une forme de granule sphérique avec un diamètre de 10 à 500 µm, et
l'épaisseur de ladite paroi de capsule étant de 1 à 10 µm ;
(2) placement d'un mélange de ladite eau et desdites micro-capsules dans un récipient sous agitation et ajout de ciment dans ledit mélange sous agitation ;
(3) agitation dudit mélange avec du ciment lentement et ensuite agitation dudit mélange avec du ciment rapidement pour former une suspension concentrée de béton ;
(4) vibration de ladite suspension concentrée de béton pour éliminer les bulles dans ladite suspension concentrée de béton et formation de ladite suspension concentrée de béton en pièces de fabrication dans des moules ;
(5) placement de ladite pièce de fabrication de côté pendant 1 à 2 heures, raclage de l'excès de ladite suspension concentrée de béton dans lesdits moules, et ensuite placement de ladite pièce de fabrication pendant 21 à 26 heures supplémentaires ; et
(6) retrait desdites pièces de fabrication desdits moules et placement desdites pièces de fabrication dans un conteneur de conservation de béton pendant 25 à 31 jours pour former ledit béton autoréparant.
